# EUROPEAN PATENT APPLICATION

(11) **EP 1 933 044 A2**
(43) Date of publication of application: **18.06.2008**
(21) Application number: 07122931.4
(22) Date of filing: 11.12.2007
(51) Int. Cl.: F16B 39/28

(54) **Two-piece, free running, prevailing torque nut**

(30) Priority: 13.12.2006 US 610459
(71) Applicant: Alcoa Global Fasteners, Inc., Torrance, California 90505 (US)
(72) Inventor: Hocking, David, Signal Hill, CA 90620 (US); Fields, William O. Jr., Buena Vista, CA 90620 (US); Montserrat, Ernest, San Gabriel, CA 91775 (US); Silver, David, Torrance, CA 90504 (US)
(74) Representative: Petraz, Gilberto Luigi

(57) **Abstract**

A threaded fastener having a two-piece nut member (20) and a bolt (15) with the nut member (20) having a threaded nut member (35) and a base member (30) is disclosed. The threaded nut member (35) has a body portion (70) and a neck portion (65), the fleck portion (65) engaging with a transition beginning engagement on the base member (30). The base member (30) includes a transition portion (50), the diameter of the transition portion (50) increasing radially as it extends axially from the cylindrical through bore portion (55) to an increased diameter at the outer planar surface of the base member. Movement of the neck potion (65) into the base member (30) resuits in the threaded form (75) having a compressive engagement with engaged threads (135) of the bolt (15) to provicle the prevailing torque structure. The threaded nut member (35) and base member (30) may be made of dissimilar materials and are more flexible in use with varying bearing surfaces.

## Description

### BACKGROUND

*1. Field*

The present disclosure relates to an improved torque nut fastener. In exemplary embodiments, the present disclosure relates to a two-piece torque nut having a threaded nut member and a base member, the torque nut having a prevailing torque feature when installed.

*2. General Background*

Threaded fasteners are utilized in variety of applications. Such fasteners include bolts and nut members having a matching threaded form for attachment. In particular applications, for example, aerospace applications, these fasteners are subject to vibration and load fluctuations causing fasteners to lose retention torque causing loosening. Frequently, a prevailing torque feature is accomplished by deforming a portion of the internal thread to cause a certain level of friction between the nut and the bolt. This will hold together the bolt and nut resisting loosening of the fastener.

In standard fasteners having two-piece nut engagements, there are variations in the tolerances between the nut and the bolt. For example, a bolt may possess a thread tolerance that resides at the low end of the range while the nut thread tolerance may be at the high end. As a result, the torque on the fastener is inconsistent and may not reach the required torque specifications.

Another problem may occur if the bolt thread is at the high end of its permissible range and the nut thread is at the low end of its permissible range. As a result, the maximum torque on the fastener can be exceeded. In these previous designs, higher torque values could freeze the nut at any given position on the bolt. Therefore, the fastener would not meet the preload requirements.

To offset this problem, fasteners have been manufactured with small variances in tolerances, raising costs. Additionally, the performance of standard threaded fasteners may vary with the material type of the mating component and performance can only be guaranteed if the material type of the mating component is controlled. Accordingly, there must be separate designs utilized for every different application.

Thus, there is a need to provide a locking torque nut that may be utilized with a variety of different pins and bolts, the bolts having different variations in thread pitches and tolerances.

There is also a need to provide a nut member having two pieces that may be joined together. By attaching the threaded member to the base member, the ease and speed of the installation is increased.

Additionally, there is a need to provide a fastener having a two-piece torque nut that is constructed from different materials, allowing for more flexibility and cost effective use with different types of bearing surfaces.

### SUMMARY

In one aspect of the present disclosure, a nut member is disclosed. The nut member includes two separate pieces, a threaded member and a base member. The base member has a throughbore, cylindrical counterbore portion and a transition portion. The transition portion has an increased diameter as it extends from the cylindrical through bore portion to the outer surface of the base member.

The threaded member of the nut member has a neck portion and a body portion, and the threaded bore extends through the threaded member. The outer diameter of the neck portion is less than the diameter of the transition portion of the base member at its outer surface allowing the nut member to be fitted with the base member prior to installation.

Upon installation of the nut member, the neck portion of the threaded nut member is moved into the transition portion and then the through bore portion of the base member. As the leading edge of the neck portion moves into the base member, the neck portion moves radially inward into a compressive engagement with the engaged threads of the bolt. As a result, the fastener is held together with a high prevailing torque.

In another aspect, the threaded member is attached to the base member for ease and increased speed of installation. The threaded member may be attached to the base member in a number of different ways, including adhesives, friction, and staking, as well as other attachment techniques.

In another aspect, a fastener is disclosed having a bolt and a two-piece nut member to secure together a plurality of workpieces. The fastener is installed in holes located in the plurality of workpieces. The bolt includes a shank having a smooth shank portion and a thread portion.

In a further aspect, a fastener is disclosed that has the capability of being installed in composite, metallic, or composite/metallic structures. For example, the disclosed fastener could be installed in steel, composites, titanium, aluminum, or a mixture of these components.

In another aspect, the disclosed nut member may be utilized with a variety of existing bolts and pins and a variety of thread forms, including low, medium and high thread pitch diameters.

In another aspect, the threaded portion and the base member of the nut member can be constructed from dissimilar materials. In exemplary embodiments, the threaded nut member may be constructed of a material that is stronger to maximize physical performance of the fastener.

Additionally, the base member may be constructed of lighter and less expensive materials. As a result, the weight of the fastener is reduced, making the fastener more cost-effective for use with aerospace applications.

In a further aspect a fastener is disclosed that includes a free running nut which also provides a prevailing torque feature upon installation. The nut member is free running along the threaded portion of the bolt prior to the neck portion of the nut member entering the base member.

Other objects, features, and advantages of the present disclosure will become apparent from the subsequent description and the appended claims.

### DRAWINGS

The foregoing aspects and advantages of present disclosure will become more readily apparent and understood with reference to the following detailed description, when taken in conjunction with the accompanying drawings, wherein:

Figure 1 illustrates an exemplary embodiment of the torque nut illustrating the threaded nut member and the base member in an unattached exploded view.

Figure 2 illustrates an embodiment of the torque nut, the threaded nut member and base member connected for ease and speed of installation.

Figure 3 illustrates a sectional view of an exemplary embodiment of the fastener prior to installation, including the threaded nut member and the base member.

Figure 4 illustrates a sectional view of another exemplary embodiment of the fastener prior to installation, including the threaded nut member and the base member.

Figure 5 illustrates the sectional view of an uninstalled fastener comprising the bolt and the nut member prior to installation of the workpieces.

Figure 6 illustrates a sectional view of the exemplary fastener after pre-installation, with the plurality of workpieces slightly clamped together.

Figure 7 illustrates a partial sectional view of the fastener showing an enlarged scale of the portion of the nut member and the threaded portion of the bolt in a final installed condition.

Figure 8 illustrates a partial sectional view of the installed nut member showing the threaded nut member and the base member in a final installed condition.

### DETAILED DESCRIPTION

A fastener for securing together a plurality of workpieces **105, 110** and adapted to be located in holes **115, 120** in such workpieces is disclosed. In exemplary embodiments, the fastener includes a bolt **15,** and a two-piece nut member **20.** In exemplary embodiments, the workpieces **105, 110** can be formed with a plurality of different materials, the materials including composite, metallic, or composite/metallic structures, any combination thereof. In particular embodiments, the workpieces **105, 110** may be constructed from steel, titanium, aluminum, composites, or any combination thereof.

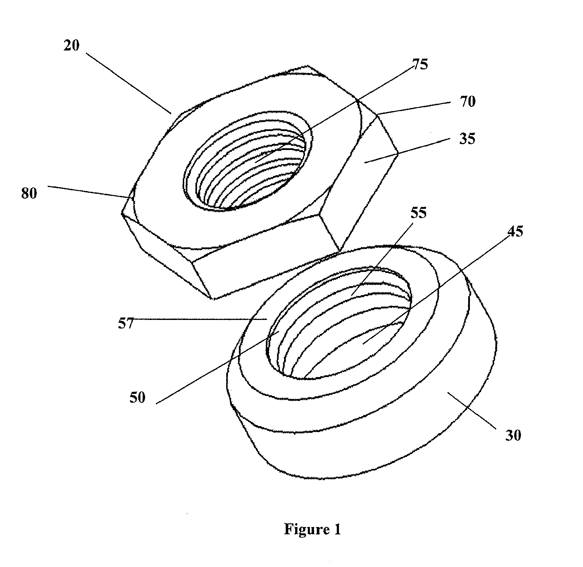

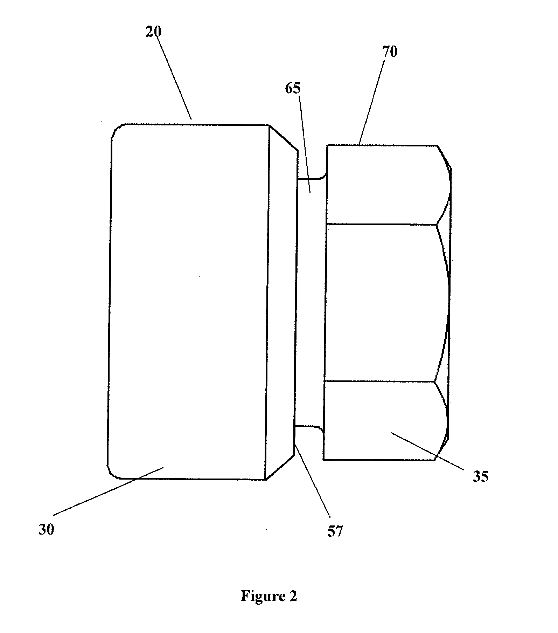

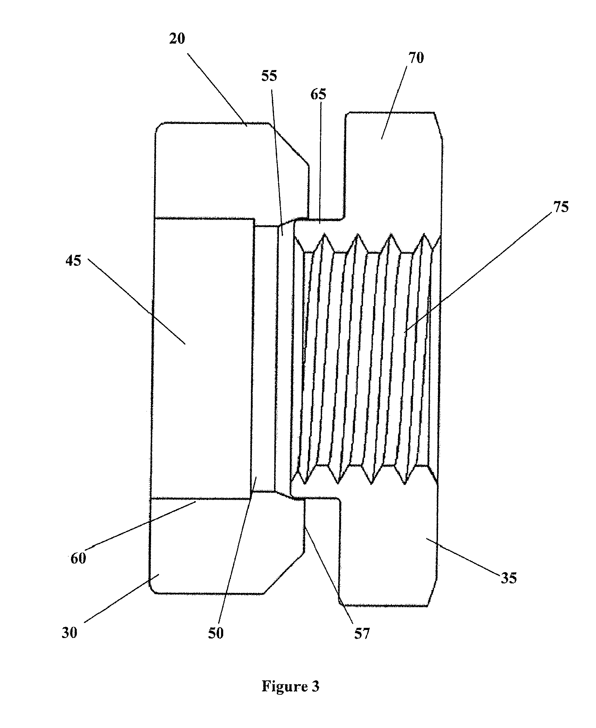

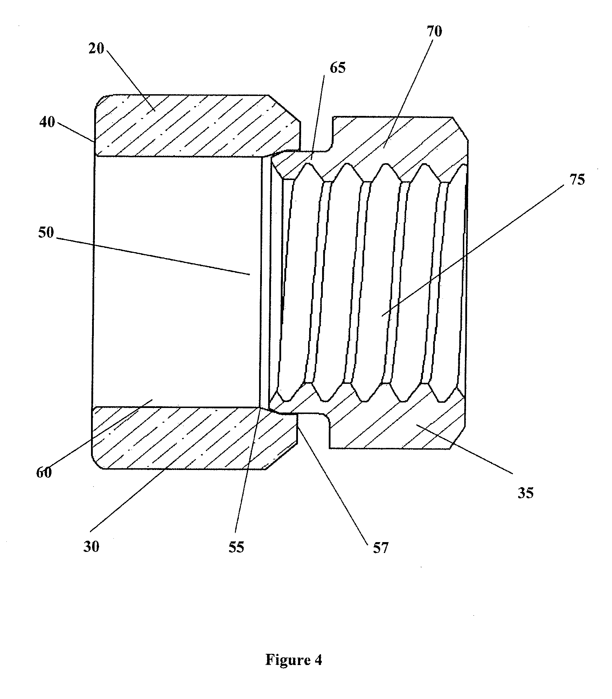

As depicted in Figures 1-4, the nut member **20** is a two piece construction having separate portions including a base member **30** and a threaded nut member **35.** The base member **30** includes a counterbore **45** to allow the bolt member **15** to extend through the base member **30.**

The base member **30** of the nut member includes a counterbore **45** that is adapted to allow the bolt of the fastener to extend through. At one end of the base member **30** is an outer surface **40** for engagement with an outer surface **125** of the workpieces **105, 110.** On the opposite end of the base member **30** is a beginning engagement transition segment **50** that engages the threaded nut member **35.**

The transition segment **50** extends axially and radially inward from the outer surface **57** of the base member **20** to a cylindrical through bore portion **55** of the base member **20.** The diameter of the transition portion of the base member decreases as it moves axially towards the cylindrical through bore portion **55** of the base member.

In exemplary embodiments, the transition portion **50** may be tapered and have an angle of less than or equal to 40° from the throughbore as the diameter decreases radially from the outer surface **57** to the through bore **55.** In the embodiment illustrated, the diameter of the transition portion **50** is tapered and decreases in a uniform fashion.

However, the transition portion can be any shape as long as the diameter decreases as it moves axially toward the cylindrical through bore portion of the base member. For examples, the transition portion could be a decreased shape such as a convex curve, a concave cure, or an s-shaped curve, or be any configuration that would cause a reduction in the diameter of the neck portion of the mating threaded nut member.

Following the cylindrical through bore portion **55** is cylindrical counterbore portion **45.** The counterbore portion **45** may have a diameter greater than that of the cylindrical through bore portion **55.** The counterbore portion **45** of the base member **30** extends from the cylindrical through bore portion **55** to the outer surface **40** of the base member **30** that is in bearing with the outer surface **125** of the workpieces **105, 110.**

The diameter of the cylindrical through bore portion **55** is fabricated with very close tolerances to provide consistency in deformation and to not exceed pre-described torque loads. As a result, over loading is controlled during installation and pre-load targets are achieved.

The threaded nut member **35** has a neck portion **65** and a body portion **70.** The body portion **70** includes a threaded throughbore **75** through the body portion **70** and neck portion **65** and can readily be applied to the threaded part of the bolt **15.** The body portion **70** has a hexagonal shape **80** on its outer surface to facilitate engagement of the head of a standard socket tool (not shown) whereby torque may be applied to the nut member **20.** However, the shape of the body portion is not limited to a hexagonal shape. In other embodiments, the shape may be a square or other suitable shape to apply torque.

The neck portion **65** has an outer diameter less than the diameter of the transition portion **50** at the outer surface of the base member. This allows the neck portion to fit into the base member **30** of the nut prior to installation. This allows the two pieces of the nut member **20** to be fitted together prior to installation.

In particular embodiments, the surface finish of the threaded nut member **35** and base member **30** can be independently adjusted. As a result, the torques and preload characteristics of the fastening assembly can be optimized.

In some embodiments, it is advantageous to attach the base member **30** to the threaded nut member **35.** In a particular embodiment, the base member **30** is attached to the threaded nut member **35** by means of an adhesive **85.** The attachment can also be accomplished in several other techniques. The threaded nut member **35** may also be attached to the base member **30** by friction, staking and other suitable methods known by those skilled in the art.

Attaching the base member **30** to the threaded nut member **35** is an improvement over prior art fasteners having a two piece construction. Previously, the two pieces would be shipped separately or loosely. As a result, parts were easy to lose. Additionally, the installation of the fastener was made much more difficult. The parts would have to be connected by an individual before installation. By attaching the two components prior to shipping, the nut member acts as a single, one-piece part increasing the speed and ease of installation, but also provides the flexibility of the two-piece fastener.

In particular embodiments, as it is preferred that the nut member **20** be of a two-piece construction, the base member **30** and threaded nut member **35** may be formed from different materials. The threaded nut member **35** may be constructed from higher strength materials to maximize the physical characteristics of the fastener. The base member **30** may be constructed of different materials that are lighter or more cost effective or other compatible materials. By constructing the base member **30** of the nut with lighter materials, the unit weight of the fastener is reduced. Accordingly, the fastener is more useful for particular applications, including aerospace applications.

Allowing the threaded nut member **35** and the base member **30** to be constructed from dissimilar materials permits the fastener to be used in many different applications. As a result, the nut member **20** can also be used with a variety of different pins or bolts. For example, the nut member **20** in the present disclosure can be utilized with bolts having low, medium and high thread pitch diameters. The fastener becomes much more flexible in use.

Additionally, the bearing surfaces may be formed from a variety of different materials. For example, the disclosed fastener **10** may be utilized on bearing surfaces including aluminum, composites, steel and many other materials. Prior art fasteners are designed and qualified on only one pin and one bearing surface. The design of this fastener is therefore an improvement over such prior art fasteners.

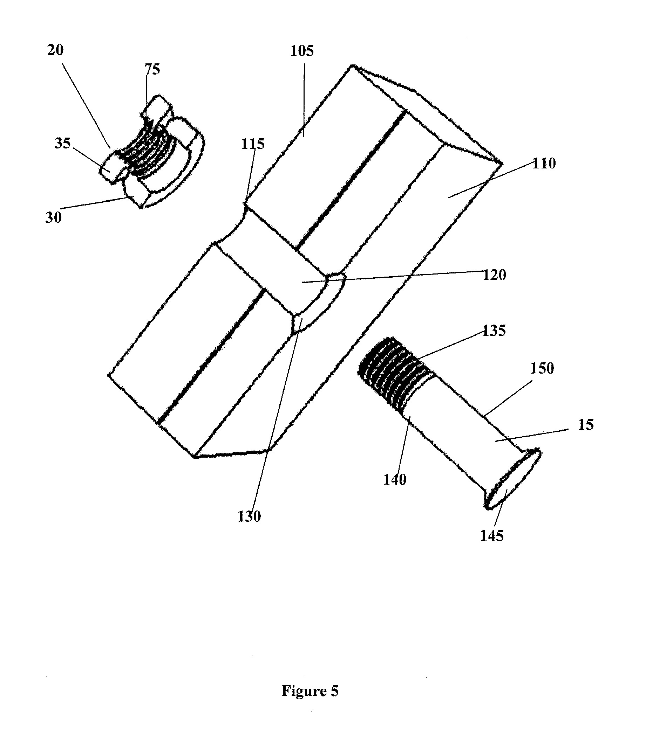

As illustrated in Figure 5, the nut member **20** is to be assembled with a bolt **15** to secure the workpieces **105, 110.** The bolt **15** has an elongated shank **140** with an enlarged head **145** at one and a threaded portion **135** at the opposite end. A smooth shank portion **150** connects the threaded portion **135** with the bolt head **145.** The shank **140** of the bolt is adapted to extend through holes **115, 120** in the plurality of workpieces **105, 110.** In particular embodiments, the hole **115** has a countersunk portion **130** adapted to receive a coutersink head on the bolt. In other embodiments, the head of the bolt is simply a flanged end to engage the outer surface of the fastener. The threaded shank portion **135** of the bolt **15** has a substantially uniform thread form **155** adapted to be received by the threaded throughbore **75** of the threaded nut member **35** of the nut member **20.**

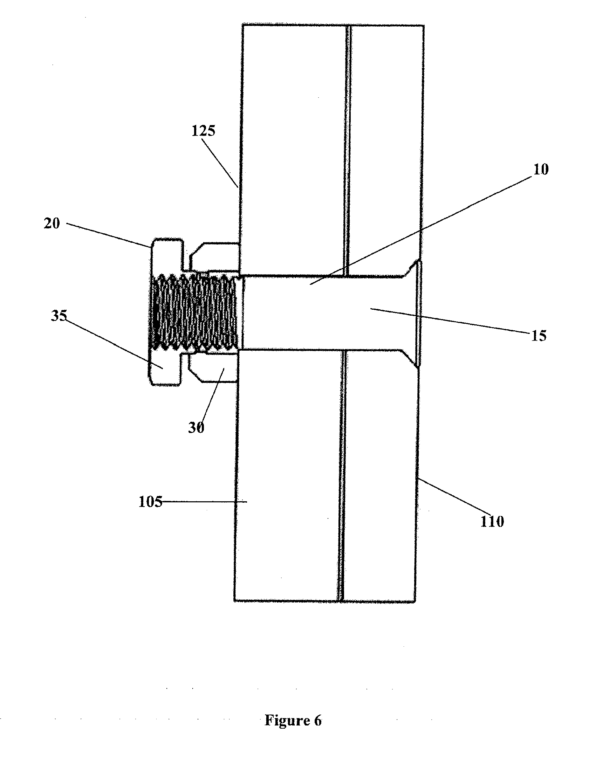

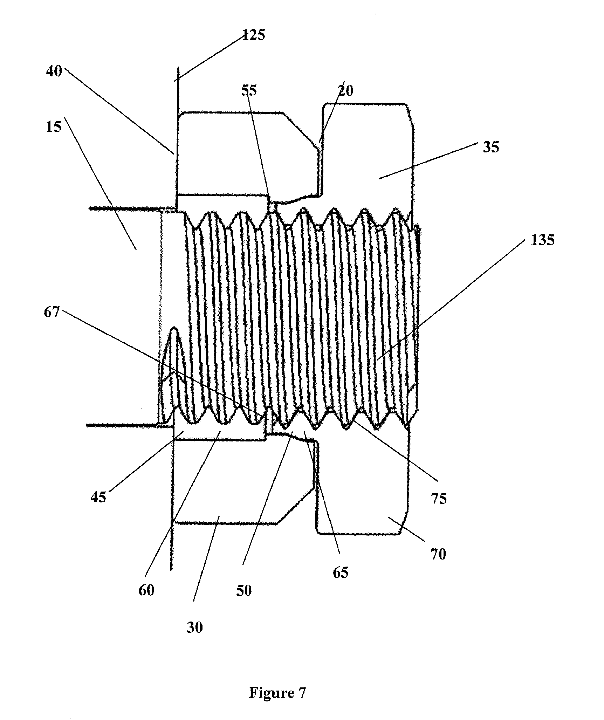

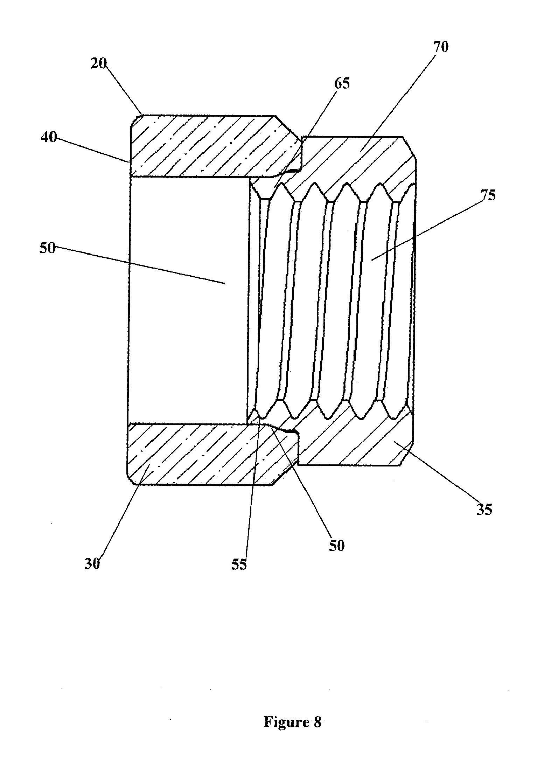

Looking now to Figures 6-8, the nut member **20** is shown in assembled relationship with a bolt **15** to define a fastener **10** securing two workpieces **105, 110** together. The nut member **20** has been threadably secured onto the threaded portion **135** of the bolt by torque applied via the hexagonal head portion of the body portion of the threaded nut member. A suitable tool (not shown) allows clamping of the plurality of workpieces together under a preselected torque.

During installation of the fastener **10,** the nut member **20** can be applied to the bolt **15** by a suitable tool or by hand to initially thread the nut section onto the threaded portion of the bolt shank. With the base member **30** of the nut member **20** in engagement with the outer surface of the workpieces **105,** a desired magnitude of initial clamp load is achieved by the application of a first predetermined magnitude of torque. At this point the threaded nut member **35** is essentially free running along the threaded portion of the bolt shank.

With the base member **30** of the nut member **20** in engagement with the outer surface **125** of the workpiece **105,** torque is applied to the threaded nut member **35,** moving the neck portion **65** of the threaded nut member **35** axially into the transition portion **50** of the base member. As the neck portion **65** of the threaded nut member **35** enters the transition beginning engagement **50** of the base member **30,** the leading edge **67** of the neck portion **65** of the thread nut member **35** is moved radially inward along the transition engagement **50** until it reaches the cylindrical through bore portion **55** of the base member **30.** As the leading edge **67** of the neck member enters the cylindrical through bore **55,** the leading edge of the neck portion **65** is moved into compressive engagement with the threaded portion of the bolt **15.**

The threaded nut member **35** will slightly deform to the shape of the threaded portion of the bolt **135** in response to the compressive engagement as the neck portion **65** is moved into the base member **30.** The design of the fastener **10** is optimized so that the engaged threads of the shank portion of the bolt **15** remain substantially undistorted.

The result is a fastener **10** holding the workpieces **105, 110** together at under a pre-selected magnitude of final clamp load and with the engaged threads of the nut **20** and bolt **15** of the installed fastener **10** held together under a high compressive load resulting in a high prevailing torque. This provides a desired resistance from removal and loosening of the fastener **10** from vibration or other loading.

In particular embodiments, the workpieces **105, 110** have a total thickness which is the total minimum thickness of the grip range of the fastener **10.** In this application, the smooth shank portion of the bolt **15** will extend past the outer surface of the workpiece and partially into the counterbore section **45** of the base member **30.** In other embodiments, the workpieces **105, 110** have a total thickness which is the maximum thickness of the grip range of the fastener **10.** As can be seen in Figure 6, at this point there is complete engagement of substantially all of the threads in the threaded bore **75** of the threaded nut member **35** with the threaded portion of the bolt **15.**

While the above description contains many particulars, these should not be considered limitations on the scope of the disclosure, but rather a demonstration of embodiments thereof. The fastener and uses disclosed herein include any combination of the different species or embodiments disclosed. Accordingly, it is not intended that the scope of the disclosure in any way be limited by the above description. The various elements of the claims and claims themselves may be combined any combination, in accordance with the teachings of the present disclosure, which includes the claims.

## Claims

1. A two-piece nut member comprising:
a base member and a threaded nut member;
the base member having a cylindrical counterbore portion; a cylindrical through bore portion having a generally uniform preselected diameter, and a transition portion, the diameter of the transition portion increasing radially as it extends axially from the cylindrical through bore portion to an increased diameter at the outer planar surface of the base member;
the threaded nut member having a body portion; a neck portion with an outer diameter less than the increased diameter of the transition portion of the base member; and a through bore with a thread formed therein, the through bore extending the length of the threaded nut member; and
wherein the neck portion of the threaded nut member is moved into the transition portion and then the cylindrical through bore of the base member, the diameter of the cylindrical through bore portion adapted to provide an interference between the helical thread of the neck portion and the threaded portion of a bolt when applying a radially compressive force between the nut member and the threaded portion of the bolt.

2. The nut of claim 1 wherein the base member and threaded nut member are pre-joined to increase the speed and ease of installation.

3. The nut of claim 2 wherein the base member is pre-joined to the threaded nut member by an attachment means selected from the group comprising adhesives, staking, friction or other attachment means.

4. The nut of claim 1 wherein the base member and the threaded nut member are constructed from different materials.

5. The nut of claim 4 wherein the base member is pre-joined to the threaded nut member by an attachment means selected from the group comprising adhesives, staking, friction or other attachment means.

6. The nut of claim 5 wherein the base member is pre-joined to the threaded nut member by an attachment means selected from the group comprising adhesives, staking, friction or other attachment means.

7. The nut of claim 1 wherein an axial length of the neck portion of the threaded nut member is no greater than the combined axial length of the transition portion and cylindrical through bore portion.

8. The nut of claim 1 wherein the nut member will be secured to the threaded portion of the bolt with a magnitude of prevailing torque.

9. The nut of claim 1 wherein the plurality of workpieces are selected from the group consisting of steel, titanium, aluminum, composites, or any combination thereof.

10. The nut of claim 1 wherein the nut member is compatible with a bolt having low, medium, and high thread pitch diameters.

11. The nut member of claim 1 wherein the body portion is adapted for applying relative torque between the nut member and the bolt.

12. The nut member of claim 1 wherein the transition portion is tapered at an angle of less than 40°.

13. A fastener for securing together a plurality of workpieces and adapted to be located in holes of a plurality of workpieces, the fastener comprising:
a bolt, the bolt having a shank with a threaded shank portion and a smooth shank portion;
a two-piece nut member, the nut member including a base member and a threaded nut member;
the base member having a cylindrical counterbore portion; a cylindrical through bore portion having a generally uniform preselected diameter, and a transition portion, the diameter of the transition portion increasing radially as it extends axially from the cylindrical through bore portion to an increased diameter at the outer planar surface of the base member;
the threaded nut member having a body portion; a neck portion with an outer diameter less than the increased diameter of the transition portion of the base member; and a through bore with a thread formed therein, the through bore extending the length of the threaded nut member; and
wherein the neck portion of the threaded nut member is moved into the transition portion and then the cylindrical through bore of the base member, the diameter of the cylindrical through bore portion adapted to provide an interference between the helical thread of the neck portion and the threaded portion of a bolt when applying a radially compressive force between the nut member and the threaded portion of the bolt.

14. The fastener of claim 13 wherein the base member and threaded nut member are pre-joined to increase the speed and ease of installation.

15. The fastener of claim 14 wherein the base member is pre-joined to the threaded nut member by an attachment means selected from the group comprising adhesives, staking, or friction.

16. The fastener of claim 13 wherein the base member and the threaded nut member are constructed from different materials.

17. The fastener of claim 16 wherein the base member is pre-joined to the threaded nut member by an attachment means selected from the group comprising adhesives, staking, friction or other attachment means.

18. The fastener of claim 17 wherein the base member is pre-joined to the threaded nut member by an attachment means selected from the group comprising adhesives, staking, friction or other attachment means.

19. The fastener of claim 13 wherein an axial length of the neck portion of the threaded nut member is no greater than the combined axial length of the transition portion and cylindrical through bore portion.

20. The fastener of claim 13 wherein the nut member will be secured to the threaded portion of the bolt with a magnitude of prevailing torque.

21. The fastener of claim 13 wherein the plurality of workpieces are selected from the group consisting of steel, titanium, aluminum, composites, or any combination thereof.

22. The fastener of claim 13 wherein the nut member is compatible with a bolt having low, medium, and high thread pitch diameters.

23. A fastener for securing together a plurality of workpieces and adapted to be located in holes of a plurality of workpieces, the fastener comprising:
a bolt, the bolt having a shank with a threaded shank portion and a smooth shank portion;
a two-piece nut member, the nut member including a base member and a threaded nut member;
the base member having a cylindrical counterbore portion; a cylindrical through bore portion having a generally uniform preselected diameter, and a transition portion, the diameter of the transition portion increasing radially as it extends axially from the cylindrical through bore portion to an increased diameter at the outer planar surface of the base member;
the threaded nut member having a body portion; a neck portion with an outer diameter less than the increased diameter of the transition portion of the base member; and a through bore with a thread formed therein, the through bore extending the length of the threaded nut member; and
wherein the neck portion of the threaded nut member is moved into the transition portion and then the cylindrical through bore of the base member, the diameter of the cylindrical through bore portion adapted to provide an interference between the helical thread of the neck portion and the threaded portion of a bolt when applying a radially compressive force between the nut member and the threaded portion of the bolt; and
wherein the nut member is free running onto the threaded portion of the bolt to clamp the workpieces together prior to the neck portion moving into the base member.

24. The fastener of claim 23 wherein the base member and threaded nut member are pre-joined to increase the speed and ease of installation.

25. The fastener of claim 24 wherein the base member is pre-joined to the threaded nut member by an attachment means selected from the group comprising adhesives, staking, or friction.

26. The fastener of claim 23 wherein the base member and the threaded nut member are constructed from different materials.

27. The fastener of claim 26 wherein an axial length of the neck portion of the threaded nut member is no greater than the combined axial length of the transition portion and cylindrical through bore portion.

28. The fastener of claim 27 wherein the nut member will be secured to the threaded portion of the bolt with a magnitude of prevailing torque.

29. The fastener of claim 23 wherein the plurality of workpieces are selected from the group consisting of steel, titanium, aluminum, graphite composites, or any combination thereof.

30. The fastener of claim 23 wherein the nut member is compatible with a bolt having low, medium, and high thread pitch diameters.
